# EUROPEAN PATENT APPLICATION

(11) **EP 3 767 130 A1**
(43) Date of publication of application: **20.01.2021**
(21) Application number: 19186276.2
(22) Date of filing: 15.07.2019
(51) Int. Cl.: F16H 1/00, F16H 55/00, F16H 55/44, F16H 55/36, F16H 55/17

(54) **A PULLEY-WHEEL**

(71) Applicant: Philip Morris Products S.A., 2000 Neuchâtel (CH)
(72) Inventor: ZAPPOLI, Stefano, 40069 Zola Predosa, Bologna (IT)
(74) Representative: HGF

(57) **Abstract**

A pulley-wheel comprising an axis, a rim, and a radially-facing surface, in which the pulley-wheel is configured to rotate around the axis. The rim of the pulley-wheel comprises a means to detachably engage with a line, and is configured to movably engage with a line when the pulley-wheel rotates around the axis. The radially-facing-surface is positioned between the rim comprising a means to detachably engage with the line and the axis, and comprises a gradient.

## Description

The present disclosure relates to a pulley-wheel and pulley systems comprising such pulley-wheels. In particular the invention relates to pulley-wheels and pulley systems that have anti-dust properties. Specifically the pulley-wheel may help to prevent dust from reaching problematic areas of the pulley-wheel, or pulley system or other devices in the manufacture or transport system.

Pulleys and pulley-wheels have been used for centuries to make lifting objects easier. In dusty environments the collection of dust in certain moving-part areas of machinery can be problematic requiring removal of the dust to prevent mechanical problems. In some instances, the collection of dust accumulates on the moving-parts of the machinery and causes resistance to motion. This has the potential to decrease machine efficiency. Collection of dust may also expedite machine wear and may lead to breakage of machinery. In order to prevent such inconveniences, maintenance operations are often required to clean the machinery, including pulley-wheels and pulley systems. Maintenance operations have the disadvantage to frequently require stopping production to carry out these tasks.

It would therefore be desirable to provide a pulley-wheel to address at least one of the aforementioned issues. The present invention advantageously provides a pulley system comprising such a pulley-wheel to address at least one of the aforementioned issues. Advantageously the present invention provides a pulley-wheel or a pulley system, with a lower maintenance requirement. The present invention provides a pulley-wheel or a pulley system comprising a pulley-wheel, to mitigate the collection of dust in areas of moving-parts of the pulley-wheel or other machinery. The present invention assists to reduce contamination, and to prevent inconveniences such as reducing downtime of machinery in order to clean, or remove dust, or repair machinery damaged by dust accumulation. Embodiments of the present invention comprise a pulley-wheel that at least partially self-cleans, by aiding removal of dust.

Particular embodiments of the present invention assist to prevent dust from reaching the axis area of a pulley-wheel. The present invention (in some embodiments) assists to collect dust in particular areas, for later removal, in order to prevent or limit dust reaching problematic areas of machinery, for example, areas of machinery with moving parts. In preventing dust from reaching the axis area of a pulley-wheel, or in removing dust before reaching more problematic areas of machinery, dust cannot accumulate in those areas. This makes maintaining the pulley-wheel and machinery easier since dust build-up is not located in areas which are difficult to access. This means that cleaning the machinery including pulley systems or pulley-wheels can be less frequent, allowing production efficiency to be improved. The present invention in some embodiments also aims to provide a pulley-wheel that for some degree at least is self-cleaning.

The present invention provides a pulley-wheel, suitable for engagement with a line and pulley system, the pulley-wheel comprising:
- an axis, in which the pulley-wheel is configured to rotate about the axis;
- a rim, the rim comprising a means to detachably engage with a line and, wherein the rim is configured to movably engage with a line when the pulley-wheel rotates around the axis;
- a radially-facing-surface positioned between the rim comprising a means to detachably engage with a line, and the axis; wherein the radially-facing-surface comprises a gradient.

By providing a pulley-wheel with a radially-facing-surface having a gradient, and which, the radially-facing-surface, is positioned between the rim comprising a means to detachably engage with a line, and the axis, dust can be prevented from reaching the axis of the pulley-wheel. The radially-facing-surface is a physical barrier preventing dust from reaching the axis area of the pulley-wheel. Such configuration allows the dust falling onto the radially-facing-surface to slide along and, in some embodiments, off the gradient (to the side of the pulley-wheel) instead of accumulating on the radially-facing-surface. In some embodiments as the pulley-wheel rotates about the axis, dust contacting the radially-facing-surface can slide along and off the radially-facing-surface. Thus evacuating the dust, precluding its build-up in an area of the surface. This is possible via the gradient of the radially-facing-surface. Instead of being collected on a surface, and potentially causing issues such as resistance to the motion of the moving-part areas, the dust can be evacuated. Alternatively in some embodiments the dust falling onto the radially-facing-surface is collected on that surface before being removed. For example, when the pulley-wheel reaches a certain point in its rotation.

In some preferred embodiments the means to detachably engage with a line comprises a plurality of troughs and protrusions. Preferably the troughs and protrusions are configured to detachably engage with corresponding troughs and protrusions of a corresponding line used to engage with the pulley-wheel. The troughs may be space that allow corresponding protrusions to fit into in a detachably engaging manner. Such that the line and pulley-wheel can make a secure attachment. The troughs need not be an enclosed space. The pulley-wheel may drive the movement of the line. Alternatively the line drives the movement of the pulley-wheel. The protrusions may be teeth. In some embodiments, together with other features, the means to detachably engage with a line comprises teeth. The protrusions, or teeth, may be similar in shape and size or may be different provided the protrusions can detachably engage with corresponding troughs. In some embodiments pairs of teeth are similar in size and shape. All the protrusions may be on the pulley-wheel and all the troughs on the line. Alternatively in other embodiments all the troughs may be on the pulley-wheel and all the protrusions on the line. In other embodiments there may be a combination of troughs and teeth on the line, or pulley-wheel, or both the line and pulley-wheel. The protrusions may be any suitable shape to detachably engage with the corresponding troughs. The protrusions, for example, may be rectangular in shape, or may be pointed or triangular in shape. The protrusions or teeth of the line that correspond with the troughs or space in the rim of the pulley-wheel may be sized and shaped to meet and touch, at least a portion of, the radially-facing-surface of the pulley-wheel. The line preferably is configured to detachably engage with the pulley-wheel. Preferably the line will detachably engage with the rim of the pulley-wheel. The line may be smooth or the line may have a plurality of troughs and protrusions, to preferably correspond to troughs and protrusions on a pulley-wheel. The line may be, for example, a belt, a timing belt, a cable, a chain, a chain sprocket, a spur gear or a rope. The one or more teeth may have a surface that is capable of allowing dust to slide along and off of the teeth.

In preferred embodiments, the pulley-wheel comprises teeth and troughs that detachably engage with corresponding teeth and troughs on a line. In alternative embodiments the pulley-wheel comprises a rim that detachably engages with a line, for example, a belt.

In specific embodiments, the pulley-wheel comprises a radially-facing-surface that at least partially extends around the axis of the pulley-wheel. In specific embodiments, the pulley-wheel comprises a radially-facing-surface that extends continuously around the axis of the pulley-wheel. In this way, when the pulley-wheel is being operated in dusty environment, or where the operation of the pulley-wheel produces dust, the accumulation of the dust can be mitigated. As the pulley-wheel rotates about its axis, the dust contacts the radially-facing-surface of the pulley-wheel and can move along the radially-facing-surface due to the gradient of the radially-facing-surface.

In specific embodiments, the radially-facing-surface extends continuously around the axis of the pulley-wheel. By having the radially-facing-surface continuously extend around the axis of the pulley-wheel, the entire circumference of the axis area can be blocked in order to mitigate the accumulation of dust.

In specific embodiments, the gradient varies over the surface of the radially-facing-surface. By having a radially-facing-surface with a gradient varying over its surface, the desired location of the accumulation or removal of dust can be predetermined. The movement of the dust and its rate of removal can also be predetermined as is desired. For example, a higher gradient can be selected at an area on the radially-facing-surface where dust is required to be removed quickly so that dust can quickly be removed from that area, and the gradient can then gradually reduce such that the dust decelerates as it slides along the radially-facing-surface. For example, the gradient of the radially-facing-surface may be low or even zero (flat) in an area or portion on the radially-facing-surface where accumulation of dust is desired before removal of the dust.

In specific embodiments, the radially-facing-surface comprises a peak-ridge. The peak-ridge is the portion of the radially-facing-surface that is disposed furthest from the axis of the pulley-wheel. A radially-facing-surface comprising a peak-ridge, allows dust to slide along the radially-facing-surface on either side of the peak-ridge. This configuration is particularly advantageous since the dust can be directed towards either side of the peak-ridge, to be evacuated in two different directions. And provides the option of evacuating the dust towards two different locations. And also shortens the distance to travel.

In some preferred embodiments, the peak-ridge is disposed centrally to the width of the radially-facing-surface. By disposing the peak-ridge centrally to the width of the radially-facing-surface, dust can be evacuated on either side of the peak-ridge. When the distance from the peak-ridge to each lateral-side of the radially-facing-surface is equal, a similar amount of dust may fall towards each side of the peak-ridge.

In specific embodiments, the peak-ridge is disposed to one lateral-side of the radially-facing-surface. By positioning the peak-ridge to be disposed to one lateral-side of the radially-facing-surface, there is provided a larger area on one side of the peak-ridge for evacuating dust. This allows the dust to be evacuated predominantly towards one side of the radially-facing-surface. It may be advantageous to remove dust from the one side of the pulley-wheel that is easier to access. Or is further away from sensitive areas of machinery.

In specific embodiments, the peak-ridge varies in position along the width of the radially-facing-surface. The variation of peak-ridge position along the width of the radially-facing-surface is advantageous as it results in a more uniform evacuation of dust. For example, if the peak-ridge was in a static position along the width of the radially-facing-surface, some dust may be in a position that is difficult to evacuate. By adding some variation in position of the peak-ridge along the width of the radially-facing-surface, some dust which may be difficult to evacuate, or even unable to be evacuated, can be evacuated by another portion along the radially-facing-surface.

In specific embodiments the peak-ridge reaches the rim, that is the peak-ridge is as far in distance from the axis, of the pulley-wheel, as the rim is. The advantage of this is that there is a continuous circumferential surface. In some embodiments the peak-ridge is not as far in distance from the axis of the pulley-wheel as the rim is.

In preferred embodiments at least one portion of the radially-facing-surface comprises a gradient in the range of 10 degrees to 60 degrees. In this way, the at least one portion of the radially-facing-surface enables the dust falling onto the radially-facing-surface to slide along and off the at least one portion of the radially-facing-surface instead of accumulating on it. In other embodiments the at least one portion of the radially-facing-surface comprises a gradient in the range of 5 degrees to 50 degrees, or 10 degrees to 45 degrees, or 20 degrees to 30 degrees.

In specific embodiments the radially-facing-surface comprises a gradient in the range of 10 degrees to 60 degrees. In this way, the gradient of the radially-facing-surface enables the dust falling onto the radially-facing-surface to slide along and off the gradient of the radially-facing-surface instead of accumulating on that surface. In other embodiments the radially-facing-surface comprises a gradient in the range of 5 degrees to 50 degrees, or 10 degrees to 45 degrees, or 20 degrees to 30 degrees.

In specific embodiments, the pulley-wheel comprises two lateral-side portions disposed between the rim comprising a means to detachably engage with a line, and the radially-facing-surface, wherein at least one lateral-side portion is solid.

In some preferred embodiments, the pulley-wheel comprises two lateral-side portions disposed between the rim comprising a means to detachably engage with a line, and the radially-facing-surface, wherein at least one lateral-side portion comprises at least one aperture. This configuration is particularly advantageous since the dust can be evacuated through the at least one aperture, and therefore from the pulley-wheel. This may decrease the need for stopping production or use, of the pulley-wheel for maintenance operations like cleaning.

In specific embodiments, the rim comprises one or more radially projecting flanges positioned at a lateral-side edge of the rim. The one or more radially projecting flanges help retain the line on the rim. This is more important when interlocking detaching means like troughs and protrusions are not used to detachably engage the pulley-wheel and the corresponding line, for example if the line is a belt, in particular a smooth belt. Embodiments may have interlocking detaching means and rims comprising one or more projecting flanges.

The present invention also provides a pulley system comprising a pulley-wheel as herein described.

In preferred embodiments, the pulley system further comprises a container for collecting dust from a portion of the radially-facing-surface. By providing a container, the dust can be collected and at some time later be evacuated from the pulley system.

In other preferred embodiments, the pulley system further comprises a vacuum source to remove dust from a portion of the radially-facing-surface. By providing the pulley system with a vacuum source, the evacuation of dust from the pulley-wheel may be further improved. This is particularly useful in embodiments where the dust is to be reused.

In specific embodiments, the pulley system further comprises a line configured to detachably engage with the pulley-wheel.

The present invention provides a method of using a pulley-wheel comprising the steps of:
- mounting the pulley-wheel onto a pulley system via an axle such that the pulley-wheel can rotate around the axle;
- detachably engaging a line to the rim having a means to detachably engage with a line; and
- detachably engaging the line with an object for relocating.

For purposes of the present disclosure, as used herein the term "angle from a parallel line with the axis" or "degrees from a parallel line with the axis" is used to describe the angular displacement between a plane of a feature's surface relative to a line that is parallel with the line about which a body rotates. Specifically as used herein, as an example, it is the angle from a parallel line with the axis of the pulley-wheel.

As used herein, the term "axis" is used to describe an imaginary straight line about which a body is able to rotate. For example the axis of the pulley-wheel is the straight line about which the pulley-wheel rotates. An axle may be positioned at the axis of the pulley-wheel.

As used herein, the term "detachably engage" is used to describe a relationship between a plurality of components which can move into position to come into operation, and can also be separated from one another into their respective components.

As used herein, the term "downward angled" is used to describe a surface, for example a surface-portion of the radially-facing-surface that decreases from a right side (of the pulley-wheel in an upright orientation) to a left side.(For example /)

As used herein, the term "dust" is used to describe any small particles of solid matter, often individually light in weight thus able to travel by air currents. The dust may be, for example, fibres.

As used herein, the term "gradient" of a line or a plane is used to describe the angle of the line from the horizontal line of the axis. For example, the angle of the line, or surface of the radially-facing-surface from the line parallel with the axis. By way of an example, a gradient of zero would indicate a flat or horizontal line.

As used herein, the term "lateral-side" is used to describe a position that is towards the left or right of a feature or component, in particular as used herein the lateral-side is used to describe the left or right sides of the pulley-wheel in an upright position. An upright position of the pulley-wheel, as used herein, is when the axis, of the pulley-wheel, is horizontal and the rim is the top, bottom, near and far sides, thus the lateral-sides are the two sides that are not the circumferential rim.

As used herein, the term "line" is used to describe an element that can be used to transmit power using a pulley-wheel or a pulley system. The line may be relatively smooth for example a smooth flat belt or rope. The line may be, for example, in the context of the present disclosure, a belt, a timing belt, a chain, a chain sprocket, a spur-gear, a cable, or a rope. The line may be attached to an object and, as in a traditional pulley-system, moves the object. The line may be a continuous line (closed, circular, not ending) where one pulley-wheel moves the line and the line moves another pulley-wheel, allowing mechanical power, torque, speed, or any combination thereof (of speed, power or torque) to be transferred.

As used herein, the term "lip" is used to describe the edge of an opening or container, and specifically herein "lip" is used to describe the raised edge of the rim to the lateral sides.

As used herein, the term "protrusion" is used to describe the protruding or extending portions (or teeth) that may detachably engage with a corresponding trough in the means to detachable engage a pulley-wheel with a corresponding line, or detachably engaging interlocking mechanism.

As used herein, the term "pulley" is used to describe a device consisting of a generally circular object over which a line is pulled over.

As used herein, the term "radially-facing- surface" is used to describe a surface in the direction of a radius going from the centre outwards along the same direction as the rim. In particular as used herein the radially-facing-surface is also positioned between the rim and the centre, thus a surface between the rim and the axis of the pulley-wheel. As used herein the radially-facing surface is a surface similar in position (and general facing direction) to the rim but closer to the radius.

As used herein, the term "rim" is used to describe an outer edge of an object, distal from its axis. By way of an example, the rim of a pulley-wheel is the outer circumference of the wheel portion of the pulley-wheel.

As used herein, the term "smooth" is used to describe s surface that is largely even and regular, and largely free from projections, lumps or indentations.

As used herein, the term "surface-portion" is used to describe a, usually distinct, portion of the radially-facing-surface that has a gradient. There may be a number of surface-portions making up the radially-facing-surface each with its own gradient. Or the surface may have a changing gradient.

As used herein, the term "tooth" or "teeth" is used to describe the "protrusion(s)" that has a function of engaging with a corresponding trough.

As used herein, the term "trough" is used to describe the recess that a corresponding protrusion or tooth can at least partially fit into, to detachably engage with.

As used herein, the term "wheel" is used to describe a generally circular object that can revolve about its own axis.

As used herein, the term "upright" in reference to the pulley wheel is used to describe the position of the pulley-wheel when the axis, of the pulley-wheel, is horizontal and the rim is the top, bottom, near and far sides, thus the lateral-sides are the two sides that are not the circumferential rim.

As used herein, the term "upward angled" is used to describe a surface, for example a surface-portion of a radially-facing-surface, that increases from a right side (of the pulley-wheel in an upright orientation) to a left side. (For example \)

As used herein, the term "width" or "cross-sectional width" is used to describe the measurement between a component's inner sidewall and outer sidewall. In relation to the rim, the width of the rim is measured when the rim is in the "upright" orientation which is where the axis is horizontal. The rim is the circumferential surface and the lateral-sides are the left and right sides, thus the width can be a measurement from one lateral-side to the other lateral-side.

Any of the features or steps described herein in relation to one embodiment, aspect or example, of the pulley-wheel, the pulley system, the method of use (including the apparatus), or the manufacture (including the apparatus) thereof of any, may be equally applicable to any other embodiment, aspect or example of any of the pulley-wheel, the pulley system, their method of use, or their method of manufacture, or the apparatus to use or to manufacture.

Reference will now be made to the drawings, which depict one or more aspects described in this disclosure. However, it will be understood that other aspects not depicted in the drawings fall within the scope of this disclosure. Like numbers used in the figures refer to like components, steps and the like. However, it will be understood that the use of a number to refer to a component in a given figure is not intended to limit the component in another figure labeled with the same number. In addition, the use of different numbers to refer to components in different figures is not intended to indicate that the different numbered components cannot be the same or similar to other numbered components. The figures are presented for purposes of illustration and not limitation. Schematic drawings presented in the figures are not necessarily to scale.
**Figure 1** is a section view of an embodiment of a pulley-wheel.
**Figure 2** is a section view of a pulley-wheel according to another embodiment.
**Figure 3** is an enlarged sectional view of a pulley-wheel according to a further embodiment.
**Figure 4** is an enlarged perspective view of a portion of a pulley-wheel according to a yet further embodiment.
**Figure** 5 is a schematic perspective view of a pulley-wheel according to a still yet further embodiment.
**Figure 6** is a schematic view of a pulley-wheel and a toothed chain as the line.

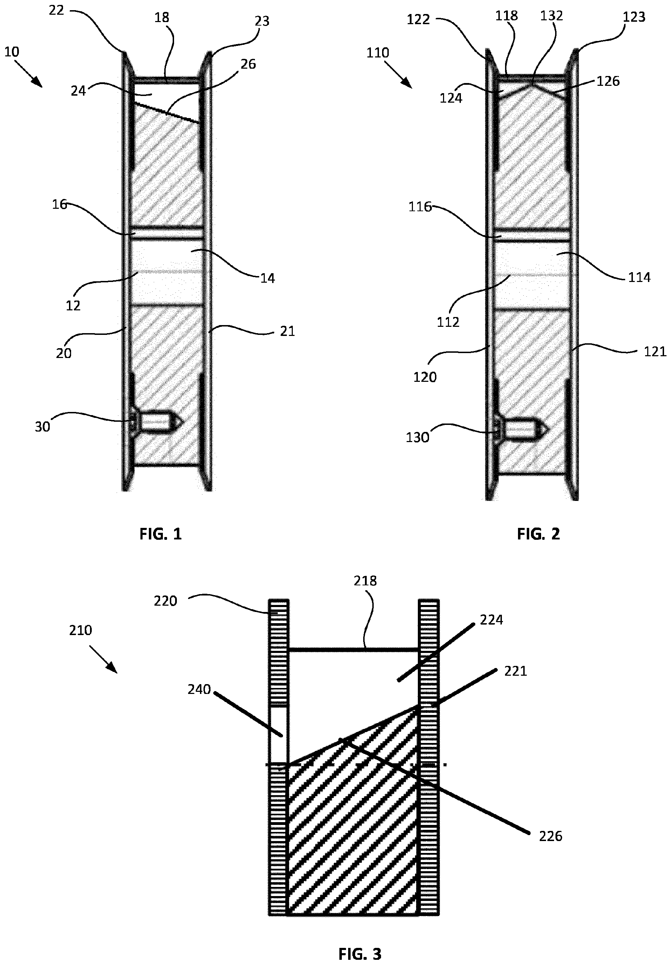

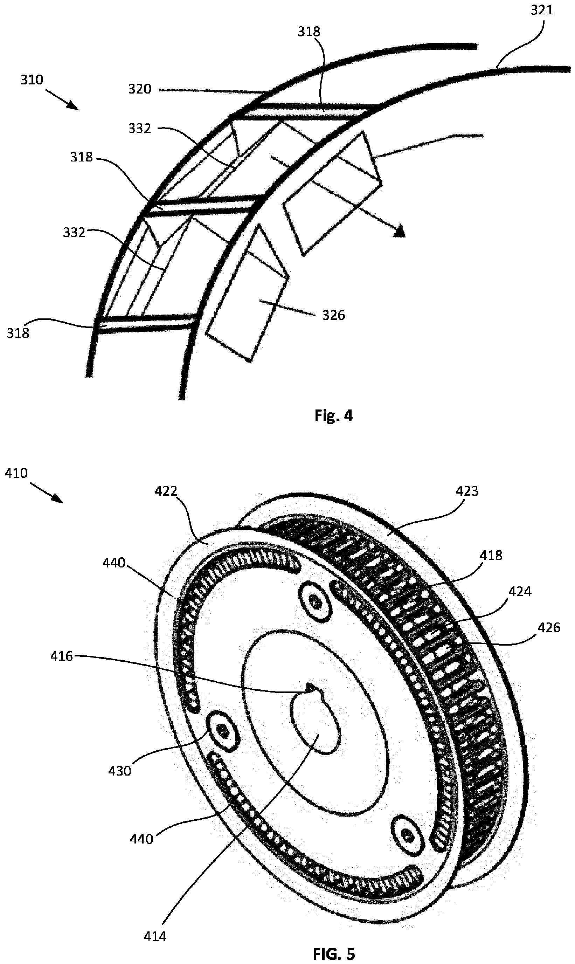

**Figure 1** illustrates an example of a pulley-wheel **10** according to an embodiment. The pulley-wheel **10** is circularly shaped, having an axis **12** about which the pulley-wheel **10** can rotate. The pulley-wheel **10** has an aperture **14** which extends through the width of the pulley-wheel **10.** The aperture **14** is positioned centrally on the pulley-wheel **10** such that the centreline of the aperture **14** is aligned with the axis **12** of the pulley-wheel **10.** Positioned above the aperture **14** is a locking ring aperture **16** also extending through the width of the pulley-wheel **10.** The pulley-wheel **10** has a rim portion **18** located on an outer circumference of the pulley-wheel **10.** In some examples, there are a number of rim portions **18** located on the outer circumference (see, for example **Figure 4****,** where a number of rim portions **18** are spaced apart around the outer circumference of the pulley-wheel **10**). The rim portion **18** provides a surface to engage with a line (not shown). The rim **18** can detachably engage with the line (not shown). The line may be, for example, a belt, a timing belt, a chain or a rope. The line may be a smooth belt able to engage with the rim portions **18** on the outer radially facing surface of the rim portions **18.** Alternatively the line may be a chain comprising teeth where the teeth can fit between the rim portions when engaging with the rim portions **18.** When the rim **18** is in contact with the line (not shown), the line also moves with the rim **18** when the pulley-wheel **10** is driven and rotates about the axis **12.** When the rim **18** is not in contact with the line (not shown), the line does not move when the pulley-wheel **10** is driven and rotates about the axis **12.** The pulley-wheel **10** is configured for engagement with a pulley-system (not shown) by placing the aperture **14** of the pulley-wheel **10** onto pulley-system shaft (or axle) (not shown) To allow the pulley-wheel **10** to be firmly attached onto the pulley-system shaft (not shown), the pulley-system shaft has a key cut-out that is able to receive a key (not shown). The key holds the pulley-system shaft and the pulley-wheel **10** together. The pulley-wheel **10** also has a fastening aperture **30** that provides further point of attachment of the pulley-wheel **10** to the pulley-system (not shown).

The pulley-wheel **10** has a lateral portion **20, 21** (in this upright orientation a left lateral portion **20** and a right lateral portion **21**) disposed on either side such that the lateral portions **20, 21** face laterally outwards. The pulley-wheel **10** also comprises flange portions **22, 23** that are integral with the lateral portions **20, 21** and extend radially beyond the rim portion **18** on the outer circumference of the pulley-wheel **10.** The flange portions **22, 23** provide a lip to retain the line (not shown) on the pulley-wheel **10** and preclude the line from slipping off the pulley-wheel **10.** The pulley-wheel **10** comprises troughs and indentation which allows projections or teeth on a line to detachably engage. The surface of the radially-facing-surface **26** has a gradient. The radially-facing-surface **26** is positioned between the rim portion **18** and the axis **12.** It is preferably that the troughs and protrusions or protrusion portions are suitable for engagement with corresponding troughs and protrusion in the line (not shown).

In this example, and in this orientation, the radially-facing-surface **26** is downward angled from a left side of the pulley-wheel **10** to a right side of the pulley-wheel **10.** In **Figure 1** the radially-facing surface **26** is only shown at the top of the pulley-wheel **10** although it completely encircles the axis **12.** There is a space **24** between the radially-facing surface **26** and the rim portions **18.** The space **24** may allow protrusions or teeth from a line to engage with the rim **18** of the pulley wheel **10.** The bottom part of the radially-facing-surface is towards the right lateral portion **21** of the pulley-wheel **10.** This configuration allows dust falling onto the radially-facing-surface **26** to slide along the radially-facing-surface. In the right-hand side direction in this orientation. Other orientations are possible. In this particular example, the radially-facing-surface **26** forms an angle of 25 degrees from a parallel line with the axis **12.** However, it is envisaged that other angles are possible such as any angle at or above 0 degrees and below 90 degrees, from a line parallel with the axis. For example, in some examples, the radially-facing-surface **26** has a constant gradient. Alternatively, in other examples, the radially-facing-surface comprises a non-constant gradient. In some examples, the gradient of the radially-facing-surface **26** decreases approaching the lateral portion **20, 21.**

**Figure 2** illustrates an example of a pulley-wheel **110** according to another embodiment. The pulley-wheel **110** has substantially the same configuration as the pulley-wheel **10** in **Figure 1** and thus like features will not be described again in detail. When the rim **118** is in contact with the line (not shown), the line also moves with the rim **118** when the pulley-wheel **110** is driven and rotates about the axis **112.** When the rim **118** is not in contact with the line (not shown), the line does not move when the pulley-wheel **110** is driven and rotates about the axis **112.**

The pulley-wheel **110** has a lateral portion **120, 121** (a left lateral portion **120** and a right lateral portion **121** in this upright orientation) disposed on either side such that the lateral portions **120, 121** face laterally outwards. The pulley-wheel **110** also comprises flange portions **122, 123** that are integral with the lateral portions **120, 121** and extend radially beyond the rim portion **118** on the outer circumference of the pulley-wheel **110.** The flange portions **122, 123** provide a lip to retain the line (not shown) on the pulley-wheel **110** and preclude the line from slipping off the pulley-wheel **110.** The pulley-wheel **110** comprises troughs as part of the means to detachably engage with the line. The radially-facing-surface **126** has a gradient. The radially-facing-surface **126** is positioned between the rim portion **118** and the axis **112.** The radially-facing surface **126** is only shown at the top portion of **Figure 2** although it is present under the rim completely circling the axis.

In this particular example, the radially-facing-surface **126** has two portions: a first upward-angled portion proximal the left lateral portion **120;** and a second downward-angled portion proximal the right lateral portion **121.** The first surface-portion and the second surface-portion of the radially-facing-surface intersect at a peak-ridge **132.** The peak-ridge **132** is disposed centrally to the width of the radially-facing-surface **126** in this example, but is it envisaged that the peak-ridge **132** can be disposed non-centrally to the width of the radially-facing-surface **126,** such as towards the left lateral portion **120,** or towards the right lateral portion **121.** The peak-ridge **132** is a portion of the radially-facing-surface **126** that is disposed furthest from the axis **112** of the pulley-wheel **110.** The first surface-portion and the second surface- portion of the radially-facing-surface each make an angle of 25 degrees (in different directions) with a parallel line with the axis **112,** thus making an angle of 130 degrees with each other. In some examples, the angle of the first-surface portion is different from the angle of the second surface-portion. In some examples, the gradient of one or both of the first surface-portion and the second surface-portion is non-constant. In some examples, the gradient of the radially-facing-surface **126** decreases approaching the respective lateral portion **20, 21, 120, 121.** In some embodiments the gradient of the radially-facing-surface is zero (flat) approaching or adjacent to a lateral-side or lateral-sides, for example within 5 millimetres from the lateral-side or lateral-sides.

**Figure 3** depicts an example of a pulley-wheel **210** according to a further embodiment. The pulley-wheel **210** has substantially the same configuration as the pulley-wheel **10** in **Figure 1** and so like features will not be described again in detail.

In the present upright orientation, as an example, the pulley-wheel **210** has a lateral portion **220, 221** (a left lateral portion **220** and a right lateral portion **221**) disposed on either side such that the lateral portions **220, 221** face laterally outwards. The pulley-wheel **210** also comprises flange portions **222, 223** that are integral with the lateral portions **220, 221** and extend radially beyond the rim portion **218** on the outer circumference of the pulley-wheel **210.** The flange portions **222, 223** provide a lip to retain the line (not shown) on the pulley-wheel **210** and assists in precluding the line from slipping off the pulley-wheel **210.** The pulley-wheel **210** comprises rim portions **218** which may be protrusions or teeth, to detachable engage with a line. The radially-facing-surface **226** has a gradient. The radially-facing-surface **226** is positioned between the rim portion **218** and the axis **212.**

The radially-facing-surface **226** in this embodiment is downward angled from a right side of the pulley-wheel **210** to a left side of the pulley-wheel **210.** The peak-ridge 132 is on the right-hand side lateral-side. The bottom part of the radially-facing-surface is towards the left lateral portion **220** of the pulley-wheel **210.** This configuration allows dust falling onto the teeth **224** to slide along the radially-facing-surface **226.** In this example, the left lateral portion **220** comprises a lateral opening **240.** The lateral opening **240** is positioned such that the bottom part of the radially-facing-surface aligns with the bottom edge of the lateral opening **240.** This configuration allows dust sliding down the radially-facing-surface **226** to be evacuated through the lateral opening **240** in the left lateral portion **220.** In some examples, the lateral opening **240** is created on both sides of the pulley-wheel **210.** It is preferably that the lateral opening(s) **240** are designed so that their shape and position can cover a plurality of troughs of the pulley-wheel (such as in the example in **Figure 4**) as it is at the troughs that dust is likely to enter. In some examples, a lateral opening **240** is created on both sides of the pulley-wheel **210** and the radially-facing-surface **226** has the two-portion arrangement of the radially-facing-surface as illustrated in **Figure 2****.** This allows dust to be evacuated from both sides of the pulley-wheel **210,** further reducing the need or frequency of maintenance operations. In some examples there is also provided a container (not shown) to collect the dust from the lateral opening **240.** In further examples, dust extracting means are placed on the lateral portions **220, 221** proximal the lateral opening **240** to draw air, and dust, from the lateral openings **240.** This increases the evacuation of the dust trapped on the radially-facing-surface of the pulley-wheel **210.** One example of implementing a dust extracting means (not shown) would be via using an empty tank (not shown) where dust is gathered, using depression caused by a difference in velocities between the system (not shown) rotating with the pulley-wheel **210** and the ambient air to suck air into the tank (not shown).

**Figure 4** illustrates a partial perspective of a pulley-wheel **310** according to a yet further embodiment. The pulley-wheel **310** has substantially the same configuration as the pulley-wheel **210** in **Figure 3** and so like features will not be described again in detail. The portion of the pulley-wheel **310** illustrated in **Figure 4** has a number of rim portions **318** located on an outer circumference of the pulley-wheel **310.** The rim portions **318** are spaced apart around the outer circumference of the pulley-wheel **310**). The rim portions **318,** the bars of the rim, with space between are protrusions and the space between are troughs. Thus the pulley-wheel **310** comprises teeth and troughs. Two troughs are illustrated in **Figure 4****.** The radially-facing-surface **326** has a gradient. The radially-facing-surface **326** has two portions: a first upward-angled surface-portion proximal the left lateral portion **320;** and a second downward-angled surface-portion proximal the right lateral portion **321.** The first surface-portion and the second surface-portion of the radially-facing-surface intersect at a peak-ridge **332.** The peak-ridge **332** is disposed centrally to the width of the radially-facing-surface **326** in this example, but is it envisaged that the peak-ridge **332** can be disposed non-centrally to the width of the radially-facing-surface **326.** In some examples, some of the radially-facing-surfaces **326** have only one surface-portion. In other examples, some of the radially-facing-surfaces **326** are flat. In some examples, the number of surface-portions could change along the radially-facing-surface **326.** In some examples, the radially-facing-surface on the same one pulley-wheel **310** may differ in terms of angle or width along its length.

The pulley-wheel **310** in **Figure 4** comprises lateral openings **340** or apertures. Each lateral opening **340** is positioned such that the bottom part of the radially-facing-surface **326** aligns with the bottom edge of the lateral opening **340.** This configuration allows dust sliding down the radially-facing-surface **326** to be evacuated through the lateral opening **340** in the lateral portion **320,** in a direction as denoted by the arrow. As a self-cleaning process. In some examples, lateral openings **340** extends across more than one trough. In some examples there is also provided a container (not shown) to collect the dust from the lateral opening **340.** In further examples, dust extracting means are placed proximal the lateral opening **340** to draw air, and dust, from the lateral opening **340.** This increases the evacuation of the dust on the radially-facing-surface **326** of the pulley-wheel **310.** One example of implementing a dust extracting means (not shown) would be via using an empty tank (not shown) where dust is gathered, using depression caused by a difference in velocities between the system rotating with the pulley-wheel **310** and the ambient air, to suck air into the tank (not shown).

**Figure 5** illustrates an example of a pulley-wheel **410** according to a further embodiment. The pulley-wheel **410** has an aperture **414** extends through the width of the pulley-wheel **410.** The aperture **414** is positioned centrally on the pulley-wheel **410** such that the centreline of the aperture **414** is aligned with the axis **412** of the pulley-wheel **410.** This aperture is for positioning an axle. Positioned above the aperture **414** is a locking ring aperture **416** also extending through the width of the pulley-wheel **410.** The pulley-wheel **410** has a plurality of rim portions **418** located on an outer circumference of the pulley-wheel **410.** The rim portions **418** are spaced apart around the outer circumference of the pulley-wheel **410.** The rim portion **418** provides a surface to engage with a line (not shown). The line may be, for example, a belt, a timing belt, a chain or a rope. The rim **418** can detachably engage with the line (not shown). When the rim **418** is in contact with the line (not shown), the line also moves with the rim **418** when the pulley-wheel **410** is driven and rotates about the axis **412.** When the rim **418** is not in contact with the line (not shown), the line does not move when the pulley-wheel **410** is driven and rotates about the axis **412.** The pulley-wheel **410** is configured for engagement with a pulley-system (not shown) by placing the aperture **414** of the pulley-wheel **410** onto pulley-system shaft (not shown) To allow the pulley-wheel **410** to be firmly attached onto the pulley-system shaft (not shown), the pulley-system shaft has a key cut-out that is able to receive a key (not shown). The key holds the pulley-system shaft and the pulley-wheel **410** together. The pulley-wheel **410** also has a fastening aperture **430** that provides a possible further point of attachment of the pulley-wheel **430** to the pulley-system (not shown).

The pulley-wheel **410** comprises flange portions **422, 423** extending radially beyond the rim portion **418** on the outer circumference of the pulley-wheel **410.** The flange portions **422, 423** provide a lip to retain the line (not shown) on the pulley-wheel **410** and preclude the line from slipping off the pulley-wheel **410.** This is important for embodiments where the means to detachable engage the pulley-wheel and line do not have an interlocking mechanism like toughs and protrusions, for example if the line is a belt, in particular a relatively smooth belt. The pulley-wheel **410** comprises troughs or spaces that protrusions from a corresponding line may detachably engage with and in. The radially-facing-surface **426** has a gradient. The radially-facing-surface **426** is positioned between the rim **418** and the axis **412.** The lateral openings **440** in this embodiment extend across a number of different troughs. This allows dust to be evacuated from the radially-facing-surface of the pulley-wheel **410.** In some embodiments, a single lateral opening **440** extends continuously around the lateral portion **420,** on one lateral-side, the other lateral-side supporting the rim.

The radially-facing-surface **426** in this **Figure 5** embodiment is downward angled from a right side of the pulley-wheel **410** to a left side of the pulley-wheel **410.** The bottom part of the radially-facing-surface is towards the left lateral portion **420** of the pulley-wheel **410.** This configuration allows dust falling onto the radially-facing-surface to slide along the radially-facing-surface **426.** In this example, the left lateral portion **420** comprises multiple lateral openings **440** spaced apart from one another. This configuration allows dust or contaminations sliding down the radially-facing-surface **426** to be evacuated through the lateral opening **440** in the left lateral portion **420.** In some examples there is also provided a container (not shown) to collect the dust from the lateral opening **440.** In further examples, dust extracting means are placed proximal the lateral opening **440** to draw air from the lateral opening **440.** This increases the evacuation of the dust trapped in the teeth **424** of the pulley-wheel **410.** One example of implementing a dust extracting means (not shown) would be via using an empty tank (not shown) where dust is gathered, using depression caused by a difference in velocities between the system (not shown) rotating with the pulley-wheel **410** and the ambient air to suck air into the tank (not shown).

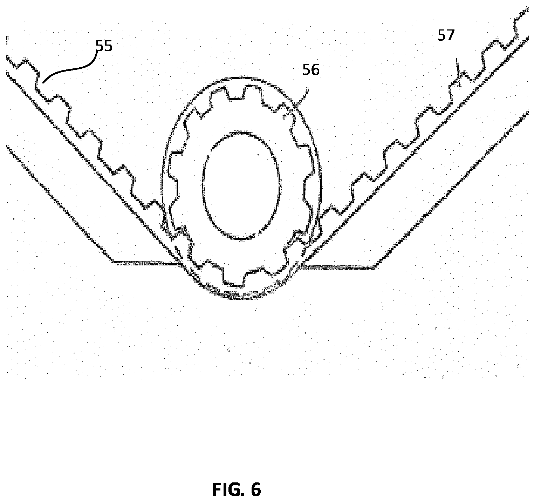

**Figure 6** shows a pulley-wheel and toothed belt where the toothed belt has troughs **55** and projections or teeth **57** that fit in a detachably engaging manner to corresponding troughs and teeth **56** of the pulley-wheel.

All scientific and technical terms used herein have meanings commonly used in the art unless otherwise specified. The definitions provided herein are to facilitate understanding of certain terms used frequently herein.

As used in this specification and the appended claims, the singular forms "a", "an", and "the" encompass embodiments having plural referents, unless the content clearly dictates otherwise.

As used in this specification and the appended claims, the term "or" is generally employed in its sense including, alternatively or in addition, unless the content clearly dictates otherwise.

As used herein, "have", "having", "include", "including", "comprise", "comprising" or the like are used in their open-ended sense, and generally mean "including, but not limited to". It will be understood that "consisting essentially of", "consisting of", and the like are subsumed in "comprising," and the like.

The words "preferred" and "preferably" refer to embodiments of the invention that may afford certain benefits under certain circumstances. However, other embodiments may also be preferred under the same or other circumstances. Furthermore, the recitation of one or more preferred embodiments does not imply that other embodiments are not useful, and, is not intended to exclude other embodiments from the scope of the disclosure, including the claims.

Any direction referred to herein, such as "top," "bottom," "left," "right," "upper," "lower," and other directions or orientations are described herein for clarity and brevity are not intended to be limiting of an actual device or system. Devices and systems described herein may be used in a number of directions and orientations.

The embodiments exemplified above are not limiting. Other embodiments consistent with the embodiments described above will be apparent to those skilled in the art.

## Claims

1. A pulley-wheel, suitable for engagement with a line and pulley system, the pulley-wheel comprising:
- an axis, in which the pulley-wheel is configured to rotate around the axis;
- a rim, the rim comprising a means to detachably engage with a line and, wherein the rim is configured to moveably engage with a line when the pulley-wheel rotates around the axis;
- a radially-facing surface positioned between the rim comprising a means to detachably engage with a line, and the axis; wherein the radially-facing surface comprises a gradient.

2. A pulley-wheel as claimed in claim 1 in which the means to detachably engage with a line comprises troughs and protrusions which are able to detachably engage with corresponding troughs and protrusions on a line.

3. A pulley-wheel as claimed in claim 2 in which the protrusions are teeth configured to engage into corresponding troughs on a line.

4. A pulley system as claimed in claim 2 or 3 in which the trough portions are configured to detachably engage corresponding protrusions on a line.

5. A pulley-wheel as claimed in any preceding claim in which the radially-facing-surface continuously extends around the axis of the pulley-wheel.

6. A pulley-wheel as claimed in any preceding claim in which the gradient varies over the surface of the radially-facing surface.

7. A pulley-wheel as claimed in any preceding claim in which the radially-facing surface has a peak-ridge, the peak-ridge being the portion of the radially-facing surface that is disposed furthest from the axis of the pulley-wheel.

8. A pulley-wheel as claimed in claim 7 in which the peak-ridge is disposed centrally to the width of the radially-facing surface.

9. A pulley-wheel as claimed in claim 7 in which the peak-ridge is disposed to one lateral side of the radially-facing surface.

10. A pulley-wheel as claimed in claim 7 in which the peak-ridge varies in position along the width of the radially-facing surface.

11. A pulley-wheel as claimed in any preceding claim in which the gradient at, at least one portion of the radially-facing surface is in the range of 10 to 60 degrees from a parallel line with the axis of the pulley-wheel.

12. A pulley-wheel as claimed in any preceding claim in which the pulley-wheel comprises two lateral-side portions disposed between the rim comprising a means to detachably engage with a line, and the radially-facing surface, wherein at least one lateral-side portion comprises at least one aperture.

13. A pulley system comprising a pulley-wheel as claimed in any one of claims 1 to 12.

14. A pulley system as claimed in claim 13 in which further comprises a container for collecting dust from a portion of the radially-facing surface.

15. A pulley system as claimed in claim 13 or 14 in which further comprises a vacuum source to remove dust from a portion of the radially-facing surface.

16. A pulley system as claimed in any one of claims 13 to 14 in which further comprises a line configured to detachably engage with the pulley-wheel.

17. A method of using a pulley-wheel as claimed in any one of claims 1 to 12 comprising the step of:
- mounting the pulley-wheel onto a pulley system via an axle such that the pulley-wheel can rotate around the axle;
- detachably engaging a line to the rim having a means to detachably engage with a line; and
- detachably engaging the line with an object for relocating.
